# EUROPEAN PATENT SPECIFICATION

(11) **EP 3 835 516 B1**
(45) Date of publication and mention of the grant of the patent: **10.08.2022**
(21) Application number: 19380034.9
(22) Date of filing: 11.12.2019
(51) Int. Cl.: E04H 12/08, F03D 13/20, E04H 12/34

(54) **METHOD FOR BUILDING A METALLIC TOWER FOR A WIND TURBINE**
VERFAHREN ZUM BAU EINES METALLTURMS FÜR EINE WINDTURBINE
PROCÉDÉ DE CONSTRUCTION D'UNE TOUR MÉTALLIQUE POUR UNE ÉOLIENNE

(43) Date of publication of application: 16.06.2021
(73) Proprietor: SIEMENS GAMESA RENEWABLE ENERGY INNOVATION & TECHNOLOGY, S.L., 31621 Sarriguren (Navarra) (ES)
(72) Inventor: Asensio Martin, Javier, 31119 Imarcoain (ES)
(74) Representative: Aspacher, Karl-Georg

(56) References cited:
- EP-A1- 3 339 636
- CN-A- 108 301 982
- DE-A1-102013 107 059

## Description

The invention concerns a method for building a metallic, in particular steel, tower for a wind turbine.

Wind turbines known in the state of the art usually comprise a nacelle with a hub and blades as major components. To rotate the blades and thus be able to provide kinetic wind energy to a generator housed in the nacelle, these major components are usually mounted, in particular rotatably, onto a wind turbine tower having a certain height chosen to provide optimal wind conditions at a corresponding hub height. Wind speed increases with height above ground. Further, a larger hub height also allows larger blade size, leading to a greater wind-swept area and lower cut-in speeds of the wind turbine. Increased hub height also leads to reduction in variability, as cut-out speeds of the wind turbine are lower for the same energy production.

Towers for wind turbines exist mainly in two variants, namely concrete towers and metallic towers. For both variants, it is known to build the tower in so-called tower sections. Tower sections are tubular/hollow cylindric components of the tower having a certain section height. These tower sections are stacked to build the tower. Regarding concrete towers the sections can be cast at the site where the tower is to be erected. Normal reinforced concrete techniques, for example using shutters or moulds, may be used to manufacture the components. Machinery and moulds can be moved from site to site.

In the variant of a metallic, in particular steel, tower, however, the tower sections need to be transported from a manufacturing site, where they are, for example, cast, to the building site. For this transport, logistic restrictions have to be taken into account. Most legislations or countries, respectively, restrict the maximum size of objects to be transported using their road network, for example to about 4.3 to 4.5 m in many countries. These logistic restrictions, regarding tower sections, apply to their diameter. This also restricts the maximally achievable hub size for steel towers to about 70 to 80 m.

To increase to achievable tower height and hence hub height for metallic wind turbine towers in an economical manner, the diameter of the tower sections would have to be increased, since other options come with their own disadvantages. If, for example, the metal thickness, in particular steel thickness, would be increased, cost would increase and limitations regarding the steel supplier's capacity may occur. This would also increase the weight of each tower section, such that the number of sections would have to be increased, leading to increased logistic costs and construction complexity. DE 10 2013 107059 A1 discloses a method for building a metallic tower for a wind turbine according to the state of the art.

It is an object of the current invention to provide a method for building higher metallic towers while avoiding logistic restrictions and in particular also excessively increased cost and complexity.

According to the invention, this object is achieved by providing a method for building a metallic, in particular steel, tower for a wind turbine, according to claim 1, comprising the steps of:
- at a manufacturing site, manufacturing hollow cylindric metallic tower sections, wherein the tower sections can be stacked in a longitudinal direction to form the tower,
- cutting, at least for tower sections whose diameter exceeds a predefined maximum diameter, the tower sections longitudinally into a first number of at least two, in particular at least three, section segments,
- transporting the section segments to a building site where the tower is to be erected,
- joining the section segments by welding to reconstruct the cut tower sections, and
- stacking the tower sections to build the tower.

The predefined maximum diameter preferably corresponds to a legal limit for transportation, wherein the tower sections are cut into section segments, in particular by choosing a suitable first number, such that each section segment fulfils the at least one legal limit. In this manner, each section segment may be transported legally from the manufacturing site to the building site. Usually, the first number will be at least three. A common case will be four section segments, but also more than four segments are conceivable.

The invention thus proposes to cut the tower sections longitudinally into section segments which are easier to transport, in particular adapted to the logistic restrictions. These section segments are rejoined at the building site by welding. This allows the transportation of tower sections having a higher diameter, in particular exceeding a legal limit for transportation, such that also the tower height and thus the hub height can be increased. Such towers may bear higher loads and allow larger blade sizes and rotor diameters, respectively. The first number and thus size of the section segments may be flexibly chosen. This allows, for example, to transport tower sections having a length of 12 m by a standard truck.

Using the invention, transport costs may also be saved due to on-site manufacture. Easy and fast installation at the building site is provided, as the required machinery may easily be transported and prepared. In particular, the installation time and installation costs do not increase significantly compared to transporting the complete tower sections.

Since the section segments are welded at the building site, no bolt connections are required longitudinally, which would lead to bolt maintenance and cause other issues. Between tower sections, the regular, known flange connections can be used, which may employ bolt connections.

In embodiments, each tower section may comprise at least one subsection, wherein manufacturing the subsections comprises providing a metal sheet, rolling the metal sheet and welding the rolled metal sheet. In other words, the tower sections may be manufactured as known before the cutting takes place, such that the inventive method requires no complex modifications regarding these steps. Metal, in particular steel, may be provided, cut and bevelled and then rolled to the hollow cylindrical form. The rolled metal sheet is then welded to result in the tower section (in the case of one subsection). In the case of multiple subsections, the multiple subsections may be weldingly connected to form the tower section. Generally, manufacturing the at least one subsection may, of course, comprise further steps, in particular machining steps like bevelling.

Generally speaking, manufacturing the tower sections may comprise adding a flange to each side of the tower sections and/or at least one machining step, in particular sand blasting, and/or painting the tower section. The flange serves to connect the tower sections when they are stacked. In summary, the complete manufacturing queue for tower sections may be applied as usual before cutting. For example, after the tower section is made by rolling at least one metal sheet and welding, an inspection step, in particular comprising non-destructive testing, may ensue. Thereafter, the tower section may be sandblasted and painted/varnished.

In a preferred embodiment, painting the tower sections comprises covering a cutting area where the tower section is cut into the section segments. That is, the cutting area is excluded from the painting process at this time since cutting would destroy the paint/varnish. Narrow strips may, for example, be used along the intended cutting lines, such that only a small fraction, for example less than 5 %, of the surface of the tower section remains unpainted. After rejoining the section segments at the building site, these excluded cutting areas may, for example and preferably manually, be painted. This does not result in considerable effort, since only a small fraction remained unpainted. In particular, only long seams have to be painted. No shot blasting cabins and/or painting cabins are required at the building site, since manual roughing and painting processes may be used.

Preferably, cutting is performed using a flame cutting machine or a plasma cutting machine. The flame cutting process is a thermo-chemical process requiring a source of intense heat and pure oxygen. Flame cutting can be used for cutting most metals used for a tower, in particular steel, since the basic requirement that the oxide formed must have a lower melting point than the base material to be cut is fulfilled. The basic plasma cutting process involves creating an electrical channel of superheated, electrically ionized gas, i.e. plasma, from the plasma cutting machine itself, through the work piece to be cut, thus forming a completed electric circuit back to the plasma cutting machine through, for example, a grounding clamp. A compressed gas, for example oxygen or air, may be blown through a focused nozzle at high speed toward the work piece. An electrical arc is then formed within the gas, between an electrode near or integrated into the gas nozzle and the work piece itself. The electrical arc ionizes some of the gas, thereby creating an electrically conductive channel of plasma. As electricity from the cutter torch travels down this plasma it delivers sufficient heat to melt through the work piece. At the same time, much of the high velocity plasma and compressed gas blow the hot molten metal away, thereby separating, i.e. cutting through, the work piece. Plasma cutting is an effective way of cutting thick materials like stainless steel wind turbine tower walls.

In particularly advantageous embodiments, after cutting, the cutting edges are bevelled, in particular V-bevelled from the inside. This bevelling process allows both easy welding from the inside of the tower section to be reconstructed as well as accurate gauging from the outside of the tower section. In preferred concrete embodiments, a reconstruction tool is used to position the section segments, wherein gauging may be performed and evaluated from the outside. After positioning is complete and all section segments are fixed in the reconstruction tool, a mobile welding machine may be inserted into the tower section, in particular welding the section segments while preferably automatically moving longitudinally through the tower section.

It is noted at this point that using longitudinal cuts in the current invention also has the advantage that circular welding, which would be more complex to realise at the building site, is avoided.

Preferably, after beveling, the cutting edges may be treated with a primer to avoid rusting during the logistic process, in particular transport and possibly storage.

In embodiments, as already explained, before welding the section segments to reconstruct the tower sections, a reconstruction tool is used to position the section segments. Such an auxiliary tool may be easily transported from building site to building site and may comprise a frame, wherein the section segments may be positioned, and/or adjustable holding devices for the section segments.

The welding of the section segments to reconstruct the tower sections may be performed as submerged arc welding. Submerged arc welding (SAW) involves the formation of an arc between a continuously fed electrode and the workpiece. A blanket of powdered flux generates a protective gas shield and a slag which protects the weld zone. The arc is submerged beneath the flux blanket and normally not visible during welding. For SAW, mobile welding machines have been proposed, which, as already discussed above, may be used to weld the section segments together from the inside of the tower section to be reconstructed.

Preferably, after welding the section segments to reconstruct the tower sections, the welding area is machined, in particular manually mechanically blasted, and/or, if the cutting area had not been painted, painted, in particular manually. For example, mechanical roughness process tools, in particular handheld tools, may be employed, as well as known manual painting tools.

Other objects and features of the present invention will become apparent from the following detailed description considered in conjunction with the accompanying drawings. The drawings, however, are only principle sketches design solely for the purpose of illustration and do not limit the invention. The drawings show:
- Fig. 1: a flowchart of an embodiment of a method according to the invention,
- Fig. 2: a manufactured tower section prepared for painting,
- Fig. 3: cut section segments,
- Fig. 4: a schematic side view of a section segment,
- Fig. 5: two adjacent cutting edges of section segments after bevelling,
- Fig. 6: a reconstruction tool at the building site,
- Fig. 7: a longitudinal welding process using a mobile welding machine, and
- Fig. 8: a principle drawing showing the stacking of tower sections to form a wind turbine tower.

Embodiments of the method according to the invention provide a simple and cost-efficient process for building a metallic wind turbine tower, in this case made of steel, wherein the tower has tower sections of a large diameter, in particular greater than 5 m, such that greater hub heights are achievable, for example hub heights greater than 80 m. Despite the large diameters, the invention allows for easy transportation respecting local logistic restrictions.

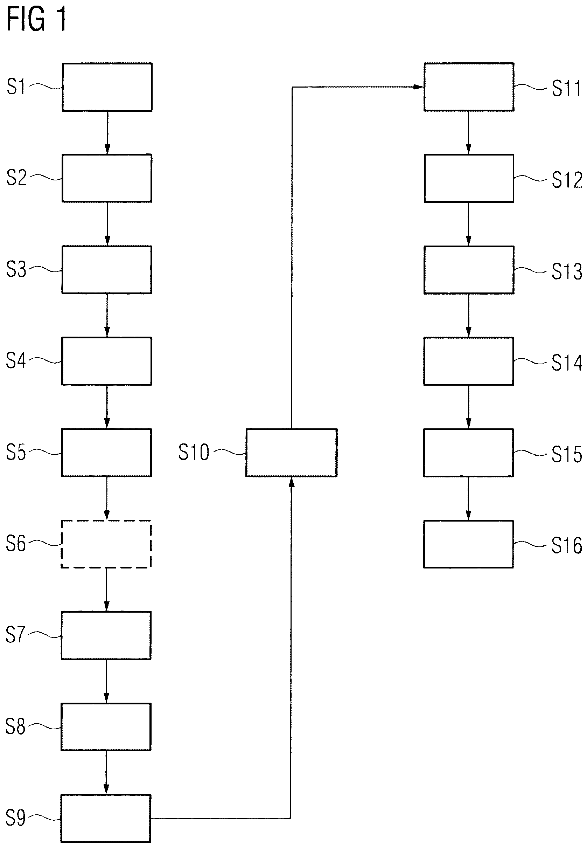

In the embodiment according to Fig. 1, steps S1 to S9 are performed at a manufacturing site, while steps S11 to S16 are performed at a building site where the tower and thus the wind turbine is to be erected.

First, in steps S1 to S8, tower sections are produced essentially as known from the state of the art, apart from a few minor modifications and the fact that the tower sections' diameter exceeds a maximum diameter, in this case defined according to a legal limit. This means that the tower sections may not be transported as such in a respective country/legislation.

In step S1, metallic material for the tower sections is provided, in this case stainless steel. In step S2, the steel is cut into metal sheets, which are bevelled for later welding. In step S3, rolling of the metal sheets into a hollow cylindrical form ensues. The welding to form the hollow cylinder takes places in step S4. In step S5, at least flanges are added at both ends of the tower section. If the tower section is made from several hollow cylindric subsections, each providing a part of the tower section height, these subsections are welded together in step S5.

In an optional step S6, the tower sections are inspected, including non-destructive testing.

In a step S7, sand blasting of the tower section takes place, for example in a blasting cabin. In step S8, at the tower section's outer surface is painted/varnished. However, before this takes place, for example in a paint cabin, cutting areas around intended cut lines are covered, for example by narrow tapes, such that the cutting areas are excluded from painting.

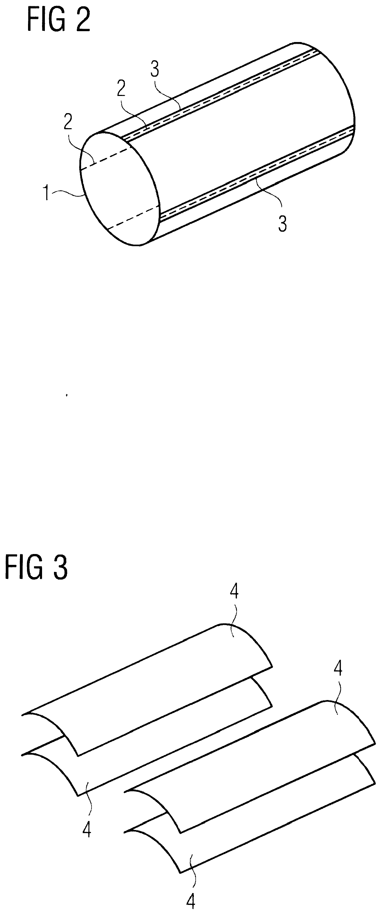

This is shown in Fig. 2, which depicts a tower section 1 to be cut into four section segments longitudinally along intended cut lines 2, shown dashed. Before painting, cutting areas 3 are covered, for example by a narrow tape, such that the fraction of the surface excluded from painting remains small, for example less than 5 %.

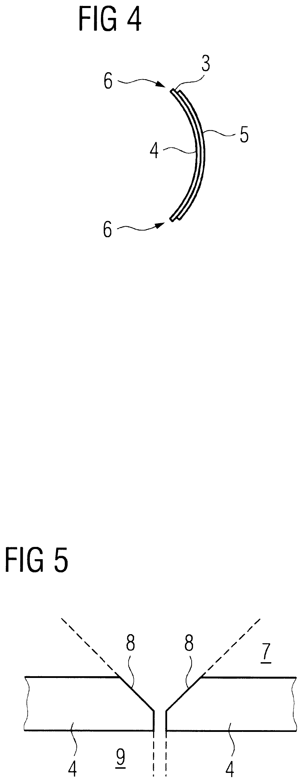

Returning to Fig. 1, in a step S9, the tower section 1 is cut into the section segments 4, which are exemplarily shown in Fig. 3, using a flame cutting machine or a plasma cutting machine. Fig. 4 shows a side view of a section segment 4, illustrating that not the whole outer surface is painted, but only the central area 5, leaving the cutting edges 6 in the cutting areas 3 free of paint.

These cutting edges 6 are, also in step S9, bevelled and treated with a primer. As shown in Fig. 5, V-bevelling from the inside 7 is performed, resulting the slanted edges 8. This greatly simplifies welding from the inside 7 as well as gauging from the outside 9 when the section segments 4 are rejoined at the building site, as further explained below. The section segments 4, which fulfil any logistic restriction, are now ready for transport.

In a step S10, see Fig. 1, the section segments 4 are transported from the manufacturing site to the building site using a standard truck or, depending on the length of the segments 4, using special trucks or transport means.

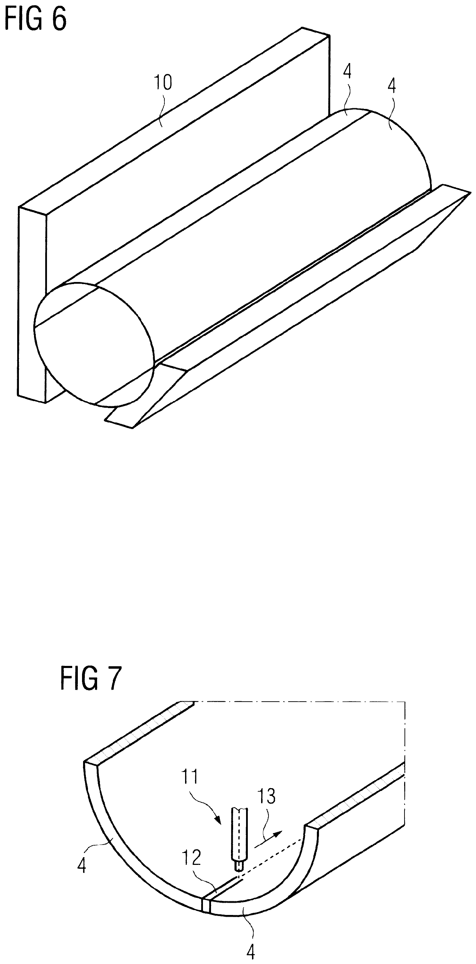

In a step S11, the section segments 4 of a tower section 1 which is to be reconstructed are placed in a reconstruction tool 10, as indicated in Fig. 6. The reconstruction tool 10 may, for example, comprise a frame and/or respective holding devices. The section segments 4 are positioned correctly, exploiting the bevelling technique explained above to gauge from the outside 9.

Returning to Fig. 1, in a step S12, the section segments 4 are re-joined to recreate the tower section 1 by longitudinal welding. The welding is performed from the inside 7 of the tower section 1, exploiting the V-bevel. This is illustrated in Fig. 7, wherein, in this case, a mobile welding machine 11 is used which is only schematically indicated. Submerged arc welding (SAW) may be used. Beginning at one face side of the tower section 1, the cutting edges 6 of the section segments 4 are welded together, as indicated by welding seam 12. The welding machine 11 is moved longitudinally, according to arrow 13, until the other face side is reached.

After welding, in a step S13 according to Fig. 1, mechanical blasting of the longitudinal welding area is performed using a mechanical roughness tool. This may be done manually. In a step S14, the longitudinal welding area is painted manually, using respective painting tools.

In an optional step S15, internal components may be added to the reconstructed tower section 1, for example platforms, ladders and the like.

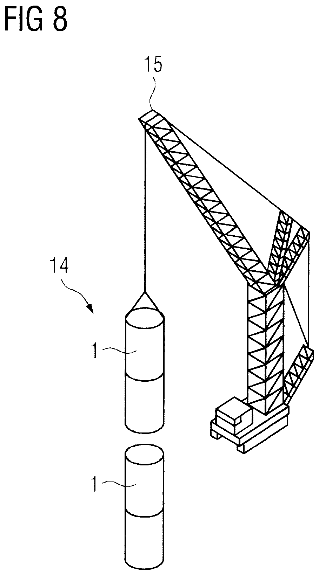

In step S16, finally, the complete tower sections 1 are stacked to build the tower 14 of the wind turbine, as shown in Fig. 8 and in principle known in the art. A crane 15 and/or another lifting tool may be used. The tower sections 1 may be connected using the flanges.

Once the tower 14 is erected, the nacelle with the hub may be added and the blades may be mounted to complete the wind turbine.

Although the present invention has been described in detail with reference to the preferred embodiment, the present invention is not limited by the disclosed examples from which the skilled person is able to derive other variations without departing from the scope of the invention as presented by the appended claims.

## Claims

1. Method for building a metallic, in particular steel, tower (14) for a wind turbine, comprising the steps of:
- at a manufacturing site, manufacturing hollow cylindric metallic tower sections (1), wherein the tower sections (1) can be stacked in a longitudinal direction to form the tower (14),
- cutting, at least for tower sections (1) whose diameter exceeds a predefined maximum diameter, the tower sections (1) longitudinally into a first number at least two section segments (4),
- transporting the section segments (4) to a building site where the tower (14) is to be erected,
- joining section segments (4) by welding to reconstruct the cut tower sections (1), and
- stacking the tower sections (1) to build the tower (14).

2. Method according to claim 1, **characterised in that** each tower section (1) comprises at least one subsection, wherein manufacturing the subsections comprises providing a metal sheet, rolling the metal sheet and welding the rolled metal sheet.

3. Method according to claim 2, **characterised in that** multiple subsections are weldingly connected to form a tower section (1).

4. Method according to one of the preceding claims, **characterised in that** manufacturing the tower sections (1) comprises adding a flange to each side of the tower sections (1) and/or at least one machining step, in particular sand blasting, and/or painting the tower section (1).

5. Method according to claim 4, **characterised in that** painting the tower sections (1) comprises covering a cutting area (3) where the tower section (1) is cut into the section segments (4).

6. Method according to one of the preceding claims, **characterised in that** cutting is performed using a flame cutting machine or a plasma cutting machine.

7. Method according to one of the preceding claims, **characterised in that**, after cutting, the cutting edges (6) are bevelled, in particular V-bevelled from the inside (7), and/or treated with a primer.

8. Method according to claim 7, **characterised in that** welding the section segments (4) is performed from the inside (7) of the tower section (1) to be reconstructed.

9. Method according to one of the preceding claims, **characterised in that**, before welding the section segments (4) to reconstruct the tower sections (1), a reconstruction tool (10) is used to position the section segments (4) and/or the welding of the section segments (4) to reconstruct the tower sections (1) is performed as submerged arc welding.

10. Method according to one of the preceding claims, **characterised in that** after welding the section segments (4) to reconstruct the tower sections (1), the welding area is machined, in particular mechanically blasted, and/or, if the cutting area (3) had not been painted, painted, in particular manually.

## Patentansprüche

1. Verfahren zum Bau eines metallischen Turms (14), insbesondere aus Stahl, für eine Windturbine, folgende Schritte umfassend:
an einem Herstellungsort, Herstellen von hohlzylindrischen metallischen Turmabschnitten (1), wobei die Turmabschnitte (1) zum Bilden des Turms (14) in einer Längsrichtung stapelbar sind, Schneiden der Turmabschnitte (1), zumindest für Turmabschnitte (1), deren Durchmesser einen vordefinierten Maximaldurchmesser überschreitet, in Längsrichtung in eine erste Anzahl von mindestens zwei Abschnittssegmenten (4),
Transportieren der Abschnittssegmente (4) zu einer Baustelle, auf der der Turm (14) errichtet werden soll,
Zusammenfügen von Abschnittssegmenten (4) durch Schweißen zum Rekonstruieren der geschnittenen Turmabschnitte (1), und
Stapeln der Turmabschnitte (1) zum Aufbau des Turms (14).

2. Verfahren nach Anspruch 1, **dadurch gekennzeichnet, dass** jeder Turmabschnitt (1) mindestens einen Teilabschnitt umfasst, wobei das Herstellen der Teilabschnitte das Bereitstellen eines Metallblechs, das Walzen des Metallblechs und das Schweißen des gewalzten Metallblechs umfasst.

3. Verfahren nach Anspruch 2, **dadurch gekennzeichnet, dass** mehrere Teilabschnitte schweißtechnisch zu einem Turmabschnitt (1) verbunden werden.

4. Verfahren nach einem der vorhergehenden Ansprüche, **dadurch gekennzeichnet, dass** das Herstellen der Turmabschnitte (1) das Hinzufügen eines Flansches an jeder Seite der Turmabschnitte (1) und/oder mindestens einen Bearbeitungsschritt, insbesondere Sandstrahlen, und/oder Lackieren des Turmabschnitts (1) umfasst.

5. Verfahren nach Anspruch 4, **dadurch gekennzeichnet, dass** das Lackieren der Turmabschnitte (1) das Abdecken eines Schneidbereichs (3) umfasst, in dem der Turmabschnitt (1) in die Abschnittssegmente (4) geschnitten wird.

6. Verfahren nach einem der vorhergehenden Ansprüche, **dadurch gekennzeichnet, dass** das Schneiden unter Verwendung einer Brennschneidmaschine oder einer Plasmaschneidmaschine durchgeführt wird.

7. Verfahren nach einem der vorhergehenden Ansprüche, **dadurch gekennzeichnet, dass** die Schnittkanten (6) nach dem Schneiden von der Innenseite (7) her abgeschrägt, insbesondere V-förmig abgeschrägt, und/oder mit einer Grundierung behandelt werden.

8. Verfahren nach Anspruch 7, **dadurch gekennzeichnet, dass** das Verschweißen der Abschnittssegmente (4) von der Innenseite (7) des zu rekonstruierenden Turmabschnitts (1) aus erfolgt.

9. Verfahren nach einem der vorhergehenden Ansprüche, **dadurch gekennzeichnet, dass** vor dem Verschweißen der Abschnittssegmente (4) zum Rekonstruieren der Turmabschnitte (1) ein Rekonstruktionswerkzeug (10) zum Positionieren der Abschnittssegmente (4) verwendet wird und/oder das Verschweißen der Abschnittssegmente (4) zum Rekonstruktieren der Turmabschnitte (1) als Unterpulverschweißen durchgeführt wird.

10. Verfahren nach einem der vorhergehenden Ansprüche, **dadurch gekennzeichnet, dass** nach dem Verschweißen der Abschnittssegmente (4) zum Rekonstruieren der Turmabschnitte (1) der Schweißbereich bearbeitet, insbesondere mechanisch gestrahlt, und/oder, falls der Schneidbereich (3) nicht lackiert war, lackiert wird, insbesondere manuell.

## Revendications

1. Procédé de construction d'une tour (14) métallique, en particulier en acier, pour une éolienne, comprenant les étapes de :
- fabrication, au niveau d'un site de fabrication, de sections de tour métalliques cylindriques creuses (1), dans lequel les sections de tour (1) peuvent être empilées dans une direction longitudinale pour former la tour (14),
- découpe, au moins pour les sections de tour (1) dont le diamètre dépasse un diamètre maximal prédéfini, des sections de tour (1) longitudinalement en un premier nombre au moins deux segments de section (4),
- transport des segments de section (4) vers un site de construction où la tour (14) doit être érigée,
- assemblage de segments de section (4) par soudage pour reconstruire les sections de tour coupées (1), et
- empilement des sections de tour (1) pour construire la tour (14).

2. Procédé selon la revendication 1, **caractérisé en ce que** chaque section de tour (1) comprend au moins une sous-section, dans lequel la fabrication des sous-sections comprend la fourniture d'une tôle, le laminage de la tôle et le soudage de la tôle laminée.

3. Procédé selon la revendication 2, **caractérisé en ce que** plusieurs sous-sections sont reliées par soudage pour former une section de tour (1).

4. Procédé selon l'une des revendications précédentes, **caractérisé en ce que** la fabrication des sections de tour (1) comprend l'ajout d'une bride à chaque côté des sections de tour (1) et/ou au moins une étape d'usinage, en particulier le sablage, et/ou la peinture de la section de tour (1).

5. Procédé selon la revendication 4, **caractérisé en ce que** la peinture des sections de tour (1) comprend le recouvrement d'une zone de découpe (3) où la section de tour (1) est découpée en segments de section (4).

6. Procédé selon l'une des revendications précédentes, **caractérisé en ce que** la découpe est réalisée en utilisant une machine de découpage au chalumeau ou une machine de découpage à plasma.

7. Procédé selon l'une des revendications précédentes, **caractérisé en ce que**, après découpe, les bords de coupe (6) sont chanfreinés, en particulier chanfreinés en V depuis l'intérieur (7), et/ou traités avec un apprêt.

8. Procédé selon la revendication 7, **caractérisé en ce que** le soudage des segments de section (4) est réalisé depuis l'intérieur (7) de la section de tour (1) à reconstruire.

9. Procédé selon l'une des revendications précédentes, **caractérisé en ce que**, avant de souder les segments de section (4) pour reconstruire les sections de tour (1), un outil de reconstruction (10) est utilisé pour positionner les segments de section (4) et/ou le soudage des segments de section (4) pour reconstruire les sections de tour (1) est réalisé comme le soudage à l'arc submergé.

10. Procédé selon l'une des revendications précédentes, **caractérisé en ce que**, après soudage des segments de section (4) pour reconstruire les sections de tour (1), la zone de soudage est usinée, en particulier décapée mécaniquement, et/ou, si la zone de découpe (3) n'avait pas été peinte, est peinte, en particulier manuellement.
